# FASCICULE DE BREVET EUROPEEN

(11) **EP 3 628 903 B1**
(45) Date de publication et mention de la délivrance du brevet: **07.04.2021**
(21) Numéro de dépôt: 19199434.2
(22) Date de dépôt: 25.09.2019
(51) Int. Cl.: F16K 31/08, F16K 99/00, F16K 31/06

(54) **DISPOSITIF DE VANNE FLUIDIQUE**
FLÜSSIGKEITSVENTILVORRICHTUNG
FLUID VALVE DEVICE

(30) Priorité: 26.09.2018 FR 1858774
(43) Date de publication de la demande: 01.04.2020
(73) Titulaire: Commissariat à l'Énergie Atomique et aux Énergies Alternatives, 75015 Paris (FR)
(72) Inventeur: PARENT, Charlotte, 38054 GRENOBLE CEDEX 09 (FR); FOUILLET, Yves, 38054 GRENOBLE CEDEX 09 (FR); VERPLANCK, Nicolas, 38054 GRENOBLE CEDEX 09 (FR)
(74) Mandataire: INNOV-GROUP

(56) Documents cités:
- WO-A1-87/04745
- WO-A1-2011/150813
- JP-U- S6 033 508
- US-A- 3 203 447
- US-A1- 2014 107 589
- US-A1- 2017 298 966

## Description

### Domaine technique de l'invention

La présente invention se rapporte à un dispositif de vanne fluidique. Le dispositif présente la particularité de comporter des moyens de commutation de type magnétique.

### Etat de la technique

Des dispositifs de vanne fluidique qui utilisent des moyens mécaniques et/ou magnétiques de commutation sont déjà bien connus.

Les vannes peuvent être découpées en différentes catégories : des vannes dites normalement fermées (NF) et des vannes dites normalement ouvertes (NO). Dans le premier cas, au repos, la vanne est fermée. Dans le second cas, au repos, la vanne est ouverte. Lors du basculement de la vanne de sa position repos à son autre position (vanne deux positions), une énergie extérieure doit être appliquée. Cette énergie peut être électrique, pneumatique, magnétique.

En outre, on distingue les vannes dites monostables et les vannes dites bistables.

Dans le cas d'une vanne monostable, lorsque l'énergie utilisée pour la faire commuter est coupée, la vanne retrouve obligatoirement son état au repos. Pour ce retour à la position repos, un ressort de rappel peut suffire.

Dans le cas d'une vanne bistable, le retour ne peut s'effectuer que par un nouvel apport d'énergie. Lorsque l'énergie est coupée, la vanne reste en position finale et seul un nouvel apport d'énergie permet de la ramener vers sa position initiale.

L'inconvénient d'une solution monostable est que l'apport en énergie est nécessaire pour maintenir la vanne dans sa position finale, contrairement à la solution bistable.

Une vanne à deux voies ou dite 2/2 (deux orifices et deux positions) est une vanne à deux orifices, c'est-à-dire avec une entrée fluidique et une seule sortie fluidique. Le fluide est injecté par l'entrée fluidique et, selon la position de la vanne, il est autorisé à circuler vers la sortie fluidique ou est interrompu.

Une vanne à trois voies ou dite 3/2 (trois orifices et deux positions) est une vanne avec trois orifices, avec une entrée fluidique, une première sortie fluidique et une deuxième sortie fluidique. Le fluide est injecté par l'entrée fluidique et peut, selon la position de la vanne, être aiguillé vers la première sortie fluidique ou vers la deuxième sortie fluidique.

Aujourd'hui, les vannes employées dans des circuits micro-fluidiques sont dans la majorité des cas de type monostable (mais peuvent également être bistables), de type NO ou NF mais indifféremment NO ou NF mais uniquement de type 2/2.

En effet, dans les circuits micro-fluidiques, pour construire une solution de vanne de type 3/2, on utilise deux vannes 2/2 monostables combinées. Ces vannes nécessitent chacune un actionneur distinct et les deux actionneurs doivent être parfaitement synchronisés.

Des vannes à actionnement magnétique sont notamment connues des documents US2017/298966A1**,** US2014/107589A1**,** JPS6033508U**,** WO2011/150813A1**,** US3203447 et WO87/04745A1**.**

Le but de l'invention est de proposer un dispositif de vanne fluidique de type 3/2 qui ne soit pas une simple combinaison de deux vannes 2/2, qui puisse n'utiliser qu'un seul actionneur, qui ne nécessite pas une solution particulière de synchronisation et qui soit réalisée simplement de manière à permettre un fonctionnement fiable.

### Exposé de l'invention

Ce but est atteint par un dispositif de vanne fluidique destiné à être agencé dans un circuit fluidique, ledit dispositif comportant :
- Une première liaison fluidique et une deuxième liaison fluidique,
- Des premiers moyens d'ouverture/fermeture agencés pour ouvrir ou fermer la première liaison fluidique et des deuxièmes moyens d'ouverture/fermeture agencés pour ouvrir ou fermer la deuxième liaison fluidique,
- Des moyens de commutation coopérant avec lesdits premiers moyens d'ouverture/fermeture et lesdits deuxièmes moyens d'ouverture/fermeture, lesdits moyens de commutation comprenant :
   ∘ Un premier ensemble de commutation comprenant un premier compartiment définissant un premier espace interne et un premier aimant permanent agencé libre en coulissement suivant une direction principale dans ledit premier espace interne, entre une première position stable pour fermer la première liaison fluidique et une deuxième position stable pour ouvrir la première liaison fluidique,
   ∘ Un deuxième ensemble de commutation comprenant un deuxième compartiment définissant un deuxième espace interne et un deuxième aimant permanent agencé libre en coulissement suivant ladite direction principale dans ledit deuxième espace interne, entre une première position stable pour fermer la deuxième liaison fluidique et une deuxième position stable pour ouvrir la deuxième liaison fluidique,
   ∘ Le premier aimant permanent et le deuxième aimant permanent étant orientés magnétiquement dans le même sens, suivant ladite direction principale et décalés d'une distance suffisante non nulle pour générer un entrefer suivant une direction transversale à ladite direction principale,
   ∘ Le premier aimant permanent et le deuxième aimant permanent étant agencés l'un par rapport à l'autre de manière à être dans un premier état d'interaction magnétique, permettant d'obtenir une première configuration mécanique stable dans laquelle le premier aimant permanent et le deuxième aimant permanent sont maintenus par effet magnétique respectivement dans leur première position et dans leur deuxième position ou dans un deuxième état d'interaction magnétique, permettant d'obtenir une deuxième configuration mécanique stable dans laquelle le premier aimant permanent et le deuxième aimant permanent sont maintenus par effet magnétique respectivement dans leur deuxième position et dans leur première position.

Selon une particularité, le premier aimant permanent et le deuxième aimant permanent sont identiques.

Selon une autre particularité, le dispositif comporte au moins un organe de commande magnétique agencé pour se déplacer entre une première position et une deuxième position pour modifier l'interaction magnétique entre le premier aimant permanent et le deuxième aimant permanent.

Selon une autre particularité, l'organe de commande magnétique est un aimant permanent.

Selon une autre particularité, ladite distance est définie en fonction de la puissance magnétique de chaque aimant permanent, de la pression du fluide injecté dans le circuit fluidique et/ou de la taille de chaque aimant permanent.

Selon une autre particularité, chaque compartiment est défini par un cylindre dans lequel l'aimant permanent peut se déplacer en coulissement comme un piston.

Selon une autre particularité, les premiers moyens d'ouverture/fermeture et les deuxièmes moyens d'ouverture/fermeture sont constitués d'une membrane souple, déformable mécaniquement sous l'action d'un aimant.

Selon une autre particularité, le dispositif est réalisé par un assemblage de plusieurs couches superposées.

L'invention concerne également un système fluidique comprenant une carte fluidique sur laquelle est réalisé un circuit fluidique comprenant plusieurs dispositifs de vannes fluidiques tels que définis ci-dessus, ledit système comportant des moyens de commande intégrant chaque organe de commande, lesdits moyens de commande se présentant sous la forme d'une carte sur laquelle sont dispersés les organes de commande, chaque organe de commande étant positionné pour coïncider avec son dispositif de vanne fluidique lors d'une séquence de déplacement relatif de ladite carte par rapport au circuit fluidique.

L'invention concerne également l'utilisation du dispositif de vanne fluidique tel que défini ci-dessus comme vanne pour commander un circuit fluidique qui comporte une entrée fluidique, une première sortie fluidique et une deuxième sortie fluidique, la première liaison fluidique étant agencée pour relier exclusivement ladite entrée fluidique à ladite première sortie fluidique et la deuxième liaison fluidique étant agencée pour relier exclusivement ladite entrée fluidique et ladite deuxième sortie fluidique.

### Brève description des figures

D'autres caractéristiques et avantages vont apparaître dans la description détaillée qui suit, faite en regard des figures annexées listées ci-dessous :
- La figure 1A représente un circuit fluidique classique à une entrée et deux sorties, commandé par une vanne bistable. La figure 1B représente un circuit fluidique à deux entrées et deux sorties, commandé par une vanne bistable.
- Les figures 2A à 2C représentent un mode de réalisation particulier d'une vanne bistable conforme à l'invention.
- La figure 3 représente une courbe permettant d'illustrer le principe de réglage magnétique du dispositif de l'invention. Cette courbe montre notamment la mesure, à l'aide d'un texturomètre, de la force F exercée par le premier aimant sur le deuxième aimant en fonction de la distance Z entre les deux aimants.

- La figure 4 illustre un principe de fabrication du dispositif de vanne fluidique de l'invention.
- La figure 5 représente un système de commande pouvant être employé dans le dispositif de l'invention.

### Description détaillée d'au moins un mode de réalisation

L'invention concerne un dispositif de vanne fluidique.

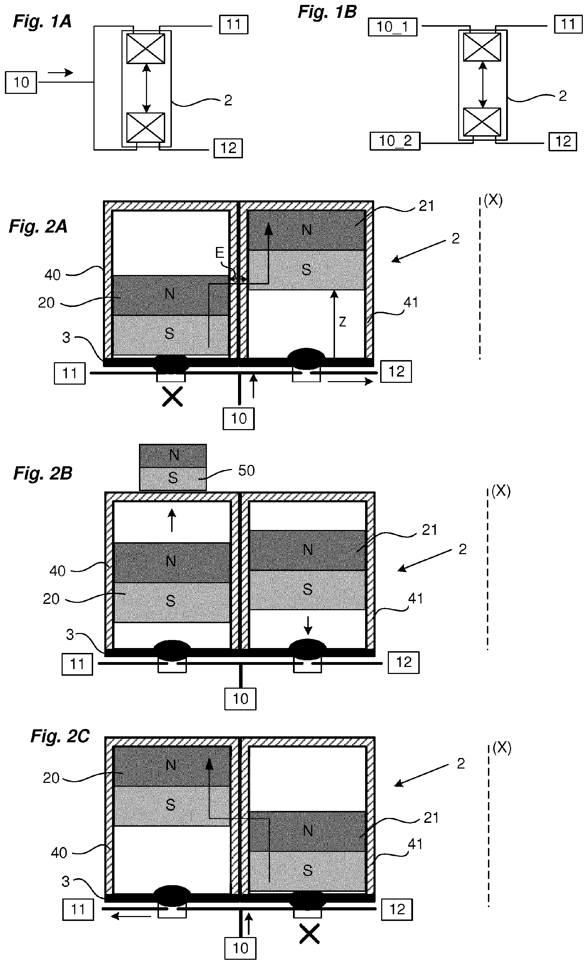

Le dispositif de vanne fluidique de l'invention est avantageusement de type bistable. Il sera parfaitement adapté pour fonctionner selon le principe d'une vanne de type 3/2 (trois orifices et deux positions). Comme représenté sur la figure 1A, il permet de s'adapter sur un circuit fluidique (ou micro-fluidique) qui comporte au moins une entrée fluidique 10, une première sortie fluidique 11 et une deuxième sortie fluidique 12. Les termes "entrée" et "sortie" doivent bien entendu être compris de manière non limitative et par "entrée" ou "sortie" il faut comprendre qu'il s'agit simplement d'une voie fluidique par laquelle circule un fluide. En référence à la figure 1B, il serait également possible d'avoir un circuit fluidique à deux liaisons fluidiques distinctes en parallèle avec deux entrées 10_1, 10_2 et deux sorties 11, 12, une première liaison fluidique reliant une première entrée 10_1 à une première sortie 11 et une deuxième liaison fluidique, distincte de la première, reliant la deuxième entrée 10_2 à la deuxième sortie 12. Un même dispositif conforme à l'invention est alors agencé pour contrôler les deux liaisons fluidiques en même temps. Dans la suite de la description, de manière non limitative, on parlera d'un circuit fluidique à une seule entrée et deux sorties mais il sera aisé de comprendre que le dispositif de l'invention peut s'appliquer à une solution à deux liaisons fluidiques distinctes en parallèle, avec deux entrées et deux sorties.

En référence à la figure 1A, le dispositif de vanne fluidique 2 conforme à l'invention est destiné à placer le circuit dans un premier état fluidique dans lequel l'entrée fluidique 10 est reliée exclusivement à la première sortie fluidique 11 et un deuxième état fluidique dans lequel l'entrée fluidique 10 est reliée exclusivement à la deuxième sortie fluidique 12. Le circuit fluidique pourra être réalisé sur une carte (ayant par exemple le format d'une carte de crédit) en matériau plastique transparent. A titre d'exemple, un tel circuit fluidique peut comporter un ou plusieurs réservoirs, différentes chambres, des conduits de liaison et donc un ou plusieurs dispositifs de vanne tels que celui décrit dans la présente demande.

Pour cela, le dispositif de vanne fluidique 2 conforme à l'invention utilise une solution magnétique à deux aimants permanents 20, 21, qui sont tous les deux mobiles entre deux positions et synchronisés par le seul effet magnétique.

Le dispositif 2 peut comporter des premiers moyens d'ouverture/fermeture destinés à ouvrir ou fermer une première liaison fluidique entre l'entrée fluidique 10 et la première sortie fluidique 11 et des deuxièmes moyens d'ouverture/fermeture destinés à ouvrir ou fermer une deuxième liaison fluidique entre l'entrée fluidique 10 et la deuxième sortie fluidique 12.

La première liaison fluidique peut comporter un premier orifice et un deuxième orifice et les premiers moyens d'ouverture/fermeture peuvent comporter une première membrane en matériau souple agencée pour se déplacer entre un premier état de fermeture dans lequel elle obture au moins l'un des deux orifices (ou même les deux), interrompant la première liaison fluidique et un deuxième état d'ouverture dans lequel elle libère les deux orifices, permettant la première liaison fluidique entre le premier orifice et le deuxième orifice.

La deuxième liaison fluidique présente les mêmes caractéristiques et peut comporter un premier orifice et un deuxième orifice et les deuxièmes moyens d'ouverture/fermeture peuvent comporter une deuxième membrane en matériau souple et déformable agencée pour se déplacer entre un premier état de fermeture dans lequel elle obture au moins l'un des deux orifices (ou même les deux), interrompant la deuxième liaison fluidique et un deuxième état d'ouverture dans lequel elle libère les deux orifices, autorisant la deuxième liaison fluidique entre le premier orifice et le deuxième orifice.

Selon un aspect particulier de l'invention, la première membrane et la deuxième membrane peuvent être réunies dans une même membrane 3 souple et déformable comprenant deux zones d'actionnement distinctes pour chacune des deux séries de deux orifices. On verra ci-après que cette solution à une seule membrane 3 peut présenter des avantages en termes de fabrication du dispositif. Les figures 2A à 2C montrent le dispositif de l'invention utilisant une membrane 3 commune.

Pour actionner les premiers moyens d'ouverture/fermeture et les deuxièmes moyens d'ouverture/fermeture, le dispositif comporte des moyens de commutation.

Les moyens de commutation comportent deux ensembles de commutation distincts, un premier ensemble de commutation dédié à la commutation des premiers moyens d'ouverture/fermeture et un deuxième ensemble de commutation dédié à la commutation des deuxièmes moyens d'ouverture/fermeture.

Le premier ensemble de commutation et le deuxième ensemble de commutation sont synchronisés en fonctionnement pour prendre un premier état dans lequel les premiers moyens d'ouverture/fermeture sont ouverts et les deuxièmes moyens d'ouverture/fermeture sont fermés et un deuxième état dans lequel les premiers moyens d'ouverture/fermeture sont fermés et les deuxièmes moyens d'ouverture/fermeture sont ouverts. Dans le premier état, l'entrée fluidique 10 est donc reliée uniquement à la première sortie fluidique 11 et dans le deuxième état, l'entrée fluidique 10 est reliée uniquement à la deuxième sortie fluidique 12.

Selon un aspect particulier de l'invention, la synchronisation entre le premier ensemble de commutation et le deuxième ensemble de commutation est réalisée par le seul effet magnétique.

Le premier ensemble de commutation comporte un premier cylindre 40 définissant un premier espace interne fermé et un premier aimant permanent 20 logé dans ce premier cylindre et agencé libre en coulissement dans ledit espace interne du cylindre 40, de manière à former un premier piston. La translation du premier aimant permanent 20 dans le premier cylindre 40 est réalisée suivant une direction définie par un axe (X).

Le deuxième ensemble de commutation comporte un deuxième cylindre 41 définissant un espace interne fermé et un deuxième aimant permanent 21 logé dans le deuxième cylindre 41 et agencé libre en coulissement dans ledit espace interne du deuxième cylindre 41, formant un deuxième piston. La translation du deuxième aimant permanent 21 dans le deuxième cylindre 41 est réalisée suivant une direction parallèle à l'axe (X) précité.

De manière avantageuse, les deux cylindres 40, 41 sont identiques et les deux aimants permanents 20, 21 sont de forme et de "puissance" magnétique identiques.

Dans chaque ensemble de commutation, l'aimant permanent 20, 21 peut se déplacer en coulissement dans son cylindre entre deux positions mécaniques distinctes stables, dites première position et deuxième position.

Dans leur première position, chaque aimant permanent 20, 21 coopère avec la membrane 3 pour la placer dans son état de fermeture. Dans leur deuxième position, la membrane 3 est libérée par les aimants permanents pour être dans son état d'ouverture.

Le premier cylindre et le deuxième cylindre 40, 41 sont préférentiellement suffisamment proches pour placer les deux aimants permanents 20, 21 en interaction magnétique.

On définit ainsi un premier état d'interaction magnétique, permettant d'obtenir une première configuration mécanique stable dans laquelle le premier aimant permanent 20 est dans sa première position stable et le deuxième aimant permanent 21 est dans sa deuxième position stable et un deuxième état d'interaction magnétique permettant d'obtenir une deuxième configuration mécanique stable dans laquelle le premier aimant permanent 20 est dans sa deuxième position stable et le deuxième aimant permanent 21 est dans sa première position stable. Les deux aimants sont maintenus chacun dans leur position respective par le seul effet magnétique.

De manière avantageuse, pour passer du premier état d'interaction magnétique au deuxième état d'interaction magnétique, le dispositif peut comporter un organe de commande de type magnétique. Cet organe de commande peut comporter un aimant permanent 50. Lorsqu'un changement d'état est commandé, cet aimant permanent 50 est approché de manière suffisante pour entrer en interaction magnétique (attraction ou répulsion) avec uniquement l'un des deux aimants permanents 20, 21 (le premier aimant permanent 20 ou le deuxième aimant permanent 21). Le déplacement en coulissement de l'aimant permanent commandé (l'aimant permanent 20 sur la figure 2B) dans un sens entraîne automatiquement, par effet magnétique uniquement, le déplacement en coulissement de l'autre aimant permanent 21 dans le sens opposé. On assiste ainsi aux mouvements de deux pistons dans des sens opposés.

Selon un aspect particulier de l'invention représenté sur les figures 2A à 2C, les deux aimants permanents 20, 21 sont positionnés pour que leur champ magnétique soit orienté suivant l'axe (X) de translation et dans le même sens (allant par exemple suivant le sens Sud (=S)-Nord (=N)).

Selon un aspect particulier de l'invention, les deux aimants permanents sont agencés de manière à créer entre eux un entrefer E magnétique (figure 2A) orienté suivant une direction transversale (préférentiellement perpendiculaire) à l'axe (X) défini ci-dessus. Cet entrefer E permet de créer un circuit magnétique entre les deux aimants permanents 20, 21. L'entrefer est généré car les deux aimants permanents 20, 21 sont décalés d'une distance Z (figure 2A) qui est préférentiellement strictement inférieure à la hauteur totale d'un aimant permanent (cette hauteur étant préférentiellement identique pour les deux aimants). La longueur de l'entrefer E est choisie non nulle et suffisante pour assurer la création d'un circuit magnétique entre les deux aimants. Comme les deux aimants coulissent en parallèle dans leur cylindre respectif, la longueur de cet entrefer E est constante.

Une distance Z suffisante doit en effet être laissée entre les deux aimants permanents 20, 21 de manière à assurer chaque état d'interaction magnétique entre les deux aimants, c'est-à-dire lorsque l'un des deux aimants est dans sa première position et l'autre dans sa deuxième position. Chaque état d'interaction magnétique est créé en mettant en vis-à-vis un pôle nord ou sud du premier aimant permanent 20 avec respectivement un pôle sud ou un pôle nord du deuxième aimant permanent 21, dans la direction transversale, les deux pôles contraires en vis-à-vis étant séparés d'une distance non nulle formant ledit entrefer E. L'entrefer E est par exemple défini par la distance en ligne droite la plus courte suivant la direction perpendiculaire à la direction de translation (X) des aimants 20, 21.

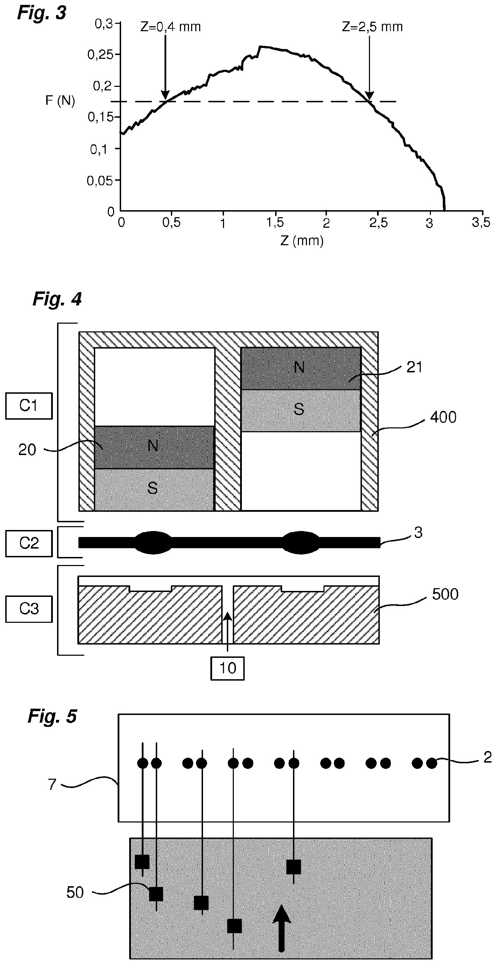

La figure 3 représente une courbe illustrant la variation de la force d'interaction magnétique (exprimée en Newton) présente entre les deux aimants permanents 20, 21 en fonction différentes valeurs de la distance Z définie ci-dessus (exprimée en mm) et pour un entrefer E constant. La distance Z correspond ainsi à l'écart de distance (suivant la direction (X)) présent entre les deux aimant lorsque l'un des aimants permanents est dans sa première position stable et l'autre aimant permanent est dans sa deuxième position stable. La courbe a été générée en utilisant deux aimants permanents identiques de forme cylindrique, présentant une hauteur de 3mm et un diamètre de base de 3mm. Les deux cylindres sont également identiques et présentent chacun une hauteur de 5.25mm et un diamètre de 3.2mm. Les deux aimants sont séparés l'un de l'autre par un entrefer magnétique E de 0.6mm. Les deux aimants choisis sont en matériau Néodyme, N45, nickelé (Référence de l'aimant : s-03-03-n de chez supermagnet :

### https://www.supermagnete.fr/aimants-disques-neodyme/disque-magnetique-diametre-3mm-hauteur-3mm-neodyme-n45-nickele S-03-03-N)

Sur cette figure, on peut voir que :
- Lorsque les aimants permanents sont faiblement décalés (Z<0.5mm), le niveau d'interaction magnétique est faible ;
- Lorsque les aimants permanents sont trop décalés (Z>2.5mm), le niveau d'interaction magnétique est également faible ;

Entre ces deux distances, le niveau d'interaction magnétique est satisfaisant, permettant un maintien stable dans leur position respective des deux aimants permanents 20, 21.

Bien entendu, le choix de la distance Z entre les deux aimants 20, 21 dépendra de différents facteurs, notamment la taille des aimants permanents, leur forme, leur puissance magnétique, leur matériau de fabrication...

Les figures 2A à 2C illustrent le principe de fonctionnement du dispositif de vanne fluidique conforme à l'invention.

Sur la figure 2A, initialement, le premier aimant permanent 20 est dans la première position stable et le deuxième aimant permanent 21 est dans la deuxième position stable. Le dispositif est dans son premier état d'interaction magnétique. Le pôle nord du premier aimant permanent 20 fait face au pôle sud du deuxième aimant permanent 21, séparés par l'entrefer E.

Sur la figure 2B, l'aimant permanent 50 de commande est approché permettant d'attirer le premier aimant permanent 20 vers sa deuxième position. En se déplaçant vers sa deuxième position, l'interaction magnétique par le circuit magnétique présent entre le premier aimant permanent 20 et le deuxième aimant permanent 21 entraîne automatiquement le déplacement du deuxième aimant permanent 21 vers sa première position stable. On peut noter que lorsque les deux aimants se croisent et se retrouvent au même niveau, leur orientation respective met en vis-à-vis les deux pôles Nord et les deux pôles Sud, ce qui correspond à un état magnétique instable. Un point mort de basculement est ensuite généré lorsque deux pôles opposés se trouvent de nouveau en vis-à-vis lors du coulissement.

Sur la figure 2C, le premier aimant permanent 20 a atteint sa deuxième position stable et le deuxième aimant permanent 21 a atteint sa première position stable. Le dispositif est dans son deuxième état d'interaction magnétique. Le pôle sud du premier aimant permanent 20 fait face au pôle nord du deuxième aimant permanent 21, séparés par l'entrefer E.

En appliquant le principe de fonctionnement des moyens de commutation décrits ci-dessus dans le dispositif de vanne fluidique pour commander un circuit fluidique tel que celui de la figure 1A, on comprend que :
- Dans le premier état d'interaction magnétique : l'entrée fluidique 10 du circuit est déconnectée de la première sortie fluidique 11 car le premier aimant permanent 20 est dans sa première position stable, venant en appui contre la membrane 3 pour la placer dans son état de fermeture (schématisé par une croix sur la figure 2A). L'entrée fluidique 10 est donc reliée exclusivement à la deuxième sortie fluidique, le deuxième aimant permanent 21 étant dans sa deuxième position stable, libérant la membrane 3 pour que celle-ci soit dans son état d'ouverture (figure 2A) ;
- Dans le deuxième état d'interaction magnétique : l'entrée fluidique 10 du circuit fluidique est connectée exclusivement à la première sortie fluidique 11 car le premier aimant permanent 20 est dans sa deuxième position stable, libérant ainsi la membrane 3 pour la placer dans son état d'ouverture. L'entrée fluidique 10 est déconnectée de la deuxième sortie fluidique 12, le deuxième aimant permanent 21 étant dans sa première position stable, venant en appui contre la membrane 3 pour la placer dans son état de fermeture (schématisé par une croix sur la figure 2C) ;

De même, comme évoqué ci-dessus, on comprend que le dispositif conforme à l'invention sera également parfaitement adapté pour gérer la commande de deux liaisons fluidiques indépendantes en parallèles, chacune de ces liaisons comportant une entrée et une sortie, dans un circuit tel que celui représenté sur la figure 1B. Dans cette application, dans le premier état d'interaction magnétique, le dispositif est alors agencé pour ouvrir la première liaison fluidique et fermer la deuxième liaison fluidique et, dans le deuxième état d'interaction magnétique, le dispositif est agencé pour fermer la première liaison fluidique et ouvrir la deuxième liaison fluidique.

Selon une variante de réalisation, les moyens d'ouverture/fermeture peuvent être rendus solidaires de chaque aimant permanent. Il pourra s'agir par exemple de partie en caoutchouc fixée sur chaque aimant pour assurer une fermeture étanche de la liaison fluidique.

En référence à la figure 4, le dispositif de vanne fluidique présentant les caractéristiques définies ci-dessus peut être fabriqué en plusieurs couches ou substrats superposées et assemblées entre elles. De manière non limitative, il peut comporter :
- Une première couche C1 comprenant les moyens de commutation. Cette couche comporte ainsi une carte 400 percée de deux cavités non traversantes, formant chacune l'espace interne d'un cylindre 40, 41 distinct du dispositif. Le premier aimant permanent 20 est inséré dans une cavité et le deuxième aimant permanent 21 est inséré dans la deuxième cavité.
- Une deuxième couche C2 assemblée sur la première couche C1 et venant recouvrir les deux cavités pour les refermer. Cette deuxième couche est réalisée sous la forme d'une membrane 3 souple déformable élastiquement. Elle peut être réalisée dans un matériau de type PDMS (Polydimethylsiloxane) ou autre matériau du même type.
- Une troisième couche C3 comprenant le circuit fluidique. Il peut s'agit d'une carte 500 dans laquelle est réalisé le circuit fluidique. De manière non limitative, le circuit peut comporter l'entrée fluidique 10 et les deux sorties fluidiques 11, 12. Deux canaux du circuit peuvent déboucher contre la membrane, à l'aplomb d'une première cavité de la première couche et deux autres canaux du circuit peuvent déboucher contre la membrane à l'aplomb de la deuxième cavité de la première couche.

Selon une réalisation particulière, lorsqu'un même système micro-fluidique 7 comporte un circuit micro-fluidique portant plusieurs dispositifs de vanne fluidique 2 (schématisé par un point sur la figure 5) ayant une configuration conforme à celle décrite ci-dessus, les moyens de commande peuvent être configurés pour assurer la commutation de chaque dispositif de vanne 2 selon une séquence donnée. Chaque organe de commande des moyens de commande pourrait être actionné manuellement ou par un actionneur commandé par une unité centrale. Il est également possible de positionner plusieurs organes de commande sur une même carte 6, comme représenté sur la figure 5. Chaque organe de commande est judicieusement positionné sur la carte 6 pour coïncider avec son dispositif de vanne fluidique lorsque la commutation de la vanne est nécessaire. Les différents organes de commande 50 peuvent être répartis sur la carte pour définir une séquence de commutation déterminée lors d'un déplacement relatif de la carte 6 par rapport au circuit fluidique commandé par les vannes.

## Revendications

1. Dispositif de vanne fluidique destiné à être agencé dans un circuit fluidique, ledit dispositif comportant:
- Une première liaison fluidique et une deuxième liaison fluidique,
- Des premiers moyens d'ouverture/fermeture agencés pour ouvrir ou fermer la première liaison fluidique et des deuxièmes moyens d'ouverture/fermeture agencés pour ouvrir ou fermer la deuxième liaison fluidique,
- Des moyens de commutation coopérant avec lesdits premiers moyens d'ouverture/fermeture et lesdits deuxièmes moyens d'ouverture/fermeture, lesdits moyens de commutation comprenant :
∘ Un premier ensemble de commutation comprenant un premier compartiment définissant un premier espace interne et un premier aimant permanent (20) agencé libre en coulissement suivant une direction principale (X) dans ledit premier espace interne, entre une première position stable pour fermer la première liaison fluidique et une deuxième position stable pour ouvrir la première liaison fluidique,
∘ Un deuxième ensemble de commutation comprenant un deuxième compartiment définissant un deuxième espace interne et un deuxième aimant permanent (21) agencé libre en coulissement suivant ladite direction principale (X) dans ledit deuxième espace interne, entre une première position stable pour fermer la deuxième liaison fluidique et une deuxième position stable pour ouvrir la deuxième liaison fluidique,
∘ Le premier aimant permanent (20) et le deuxième aimant permanent (21) étant orientés magnétiquement dans le même sens, suivant ladite direction principale (X) et décalés suivant cette direction principale d'une distance (Z) suffisante non nulle pour générer un entrefer magnétique suivant une direction transversale à ladite direction principale (X), ledit dispositif étant **caractérisé en ce que**
∘ Le premier aimant permanent (20) et le deuxième aimant permanent (21) sont agencés l'un par rapport à l'autre de manière à être dans un premier état d'interaction magnétique, permettant d'obtenir une première configuration mécanique stable dans laquelle le premier aimant permanent (20) et le deuxième aimant permanent (21) sont maintenus par le seul effet magnétique respectivement dans leur première position et dans leur deuxième position ou dans un deuxième état d'interaction magnétique, permettant d'obtenir une deuxième configuration mécanique stable dans laquelle le premier aimant permanent (20) et le deuxième aimant permanent (21) sont maintenus par le seul effet magnétique respectivement dans leur deuxième position et dans leur première position.

2. Dispositif selon la revendication 1, **caractérisé en ce que** le premier aimant permanent (20) et le deuxième aimant permanent (21) sont identiques.

3. Dispositif selon la revendication 1 ou 2, **caractérisé en ce qu'**il comporte au moins un organe de commande magnétique agencé pour se déplacer entre une première position et une deuxième position pour modifier l'interaction magnétique entre le premier aimant permanent (20) et le deuxième aimant permanent (21).

4. Dispositif selon la revendication 3, **caractérisé en ce que** l'organe de commande magnétique est un aimant permanent (50).

5. Dispositif selon l'une des revendication 1 à 4, **caractérisé en ce que** ladite distance (Z) est définie en fonction de la puissance magnétique de chaque aimant permanent, de la pression du fluide injecté dans le circuit fluidique et/ou de la taille de chaque aimant permanent.

6. Dispositif selon l'une des revendications 1 à 5, **caractérisé en ce que** chaque compartiment est défini par un cylindre (40, 41) dans lequel l'aimant permanent peut se déplacer en coulissement comme un piston.

7. Dispositif selon l'une des revendications 1 à 6, **caractérisé en ce que** les premiers moyens d'ouverture/fermeture et les deuxièmes moyens d'ouverture/fermeture sont constitués d'une membrane (3) souple, déformable mécaniquement sous l'action d'un aimant.

8. Dispositif selon l'une des revendications 1 à 7, **caractérisé en ce qu'**il est réalisé par un assemblage de plusieurs couches superposées.

9. Système fluidique comprenant une carte fluidique sur laquelle est réalisé un circuit fluidique comprenant plusieurs dispositifs de vannes fluidiques tels que définis dans l'une des revendications 1 à 8, **caractérisé en ce qu'**il comporte des moyens de commande intégrant chaque organe de commande, lesdits moyens de commande se présentant sous la forme d'une carte (6) sur laquelle sont dispersés les organes de commande, chaque organe de commande étant positionné pour coïncider avec son dispositif de vanne fluidique (2) lors d'une séquence de déplacement relatif de ladite carte par rapport au circuit fluidique.

10. Utilisation du dispositif de vanne fluidique tel que défini dans l'une des revendications 1 à 8 comme vanne pour commander un circuit fluidique qui comporte une entrée fluidique (10), une première sortie fluidique (11) et une deuxième sortie fluidique (12), la première liaison fluidique étant agencée pour relier exclusivement ladite entrée fluidique à ladite première sortie fluidique et la deuxième liaison fluidique étant agencée pour relier exclusivement ladite entrée fluidique et ladite deuxième sortie fluidique.

## Patentansprüche

1. Fluidventilvorrichtung, die dazu bestimmt ist, in einem Fluidkreis angeordnet zu werden, wobei die Vorrichtung Folgendes umfasst:
- eine erste Fluidverbindung und eine zweite Fluidverbindung,
- erste Öffnungs-/Schließ-Mittel, die dafür ausgelegt sind, die erste Fluidverbindung zu öffnen und zu schließen, und zweite Öffnungs-/Schließ-Mittel, die dafür ausgelegt sind, die zweite Fluidverbindung zu öffnen und zu schließen,
- Umschaltmittel, die mit den ersten Öffnungs-/Schließ-Mitteln und mit den zweiten Öffnungs-/Schließ-Mitteln zusammenwirken, wobei die Umschaltmittel Folgendes umfassen:
• eine erste Umschaltanordnung, die ein erstes Fach, das einen ersten Innenraum definiert, und einen ersten Permanentmagneten (20), der dafür ausgelegt ist, längs einer Hauptrichtung (X) in dem ersten Innenraum zwischen einer ersten stabilen Position, um die erste Fluidverbindung zu schließen, und einer zweiten stabilen Position, um die erste Fluidverbindung zu öffnen, frei zu gleiten, aufweist,
• eine zweite Umschaltanordnung, die ein zweites Fach, das einen zweiten Innenraum definiert, und einen zweiten Permanentmagneten (21), der dafür ausgelegt ist, längs der Hauptrichtung (X) in dem zweiten Innenraum zwischen einer ersten stabilen Position, um die zweite Fluidverbindung zu schließen, und einer zweiten stabilen Position, um die zweite Fluidverbindung zu öffnen, frei zu gleiten, aufweist,
• wobei der erste Permanentmagnet (20) und der zweite Permanentmagnet (21) längs der Hauptrichtung (X) magnetisch im selben Sinn orientiert sind und längs dieser Hauptrichtung um eine ausreichende, von Null verschiedene Strecke (Z) versetzt sind, um einen Magnetspalt in einer Richtung quer zu der Hauptrichtung (X) zu erzeugen, wobei die Vorrichtung **dadurch gekennzeichnet** ist, das
• der erste Permanentmagnet (20) und der zweite Permanentmagnet (21) relativ zueinander in der Weise angeordnet sind, dass sie
in einem ersten magnetischen Wechselwirkungszustand sind, der ermöglicht, eine erste, mechanisch stabile Konfiguration zu erhalten, in der der erste Permanentmagnet (20) und der zweite Permanentmagnet (21) ausschließlich durch die magnetische Wirkung in seiner ersten Position bzw. in seiner zweiten Position gehalten werden, oder
in einem zweiten magnetischen Wechselwirkungszustand sind, der ermöglicht, eine zweite, mechanisch stabile Konfiguration zu erhalten, in der der erste Permanentmagnet (20) und der zweite Permanentmagnet (21) ausschließlich durch die magnetische Wirkung in seiner zweiten Position bzw. in seiner ersten Position gehalten werden.

2. Vorrichtung nach Anspruch 1, **dadurch gekennzeichnet, dass** der erste Permanentmagnet (20) und der zweite Permanentmagnet (21) gleich sind.

3. Vorrichtung nach Anspruch 1 oder 2, **dadurch gekennzeichnet, dass** sie wenigstens ein magnetisches Steuerorgan enthält, das dafür ausgelegt ist, sich zwischen einer ersten Position und einer zweiten Position zu verlagern, um die magnetische Wechselwirkung zwischen dem ersten Permanentmagneten (20) und dem zweiten Permanentmagneten (21) zu modifizieren.

4. Vorrichtung nach Anspruch 3, **dadurch gekennzeichnet, dass** das magnetische Steuerorgan ein Permanentmagnet (50) ist.

5. Vorrichtung nach einem der Ansprüche 1 bis 4, **dadurch gekennzeichnet, dass** die Strecke (Z) als Funktion der magnetischen Leistung jedes Permanentmagneten, des Drucks des Fluids, das in den Fluidkreis eingeleitet wird, und/oder der Größe jedes Permanentmagneten definiert ist.

6. Vorrichtung nach einem der Ansprüche 1 bis 5, **dadurch gekennzeichnet, dass** jedes Fach durch einen Zylinder (40, 41) definiert ist, in dem sich der Permanentmagnet wie ein Kolben gleitend verlagern kann.

7. Vorrichtung nach einem der Ansprüche 1 bis 6, **dadurch gekennzeichnet, dass** die ersten Öffnungs-/Schließ-Mittel und die zweiten Öffnungs-/Schließ-Mittel aus einer nachgiebigen Membran (3), die unter der Wirkung eines Magneten mechanisch verformbar ist, gebildet sind.

8. Vorrichtung nach einem der Ansprüche 1 bis 7, **dadurch gekennzeichnet, dass** sie durch eine Zusammenfügung mehrerer übereinanderliegender Schichten verwirklicht ist.

9. Fluidsystem, das eine Fluidkarte enthält, auf der ein Fluidkreis verwirklicht ist, der mehrere Fluidventilvorrichtungen nach einem der Ansprüche 1 bis 8 umfasst, **dadurch gekennzeichnet, dass** es Steuermittel, die jedes Steuerorgan integrieren, umfasst, wobei die Steuermittel die Form einer Karte (6) aufweisen, auf der die Steuerorgane verteilt sind, wobei jedes Steuerorgan so positioniert ist, dass es in einer Folge relativer Verlagerungen zwischen der Karte und dem Fluidkreis mit seiner Fluidventilvorrichtung (2) deckungsgleich ist.

10. Verwendung einer Fluidventilvorrichtung nach einem der Ansprüche 1 bis 8 als Ventil, um einen Fluidkreis zu steuern, der einen Fluideingang (10), einen ersten Fluidausgang (11) und einen zweiten Fluidausgang (12) umfasst, wobei die erste Fluidverbindung dafür ausgelegt ist, den Fluideingang ausschließlich mit dem ersten Fluidausgang zu verbinden, und die zweite Fluidverbindung dafür ausgelegt ist, den Fluideingang ausschließlich mit dem zweiten Fluidausgang zu verbinden.

## Claims

1. Fluid valve device intended to be arranged in a fluid circuit, said device comprising:
- a first fluid connection and a second fluid connection,
- first opening/closing means designed to open or close the first fluid connection and second opening/closing means designed to open or close the second fluid connection,
- switching means collaborating with said first opening/closing means and said second opening/closing means, said switching means comprising:
∘ a first switching assembly comprising a first compartment defining a first internal space and a first permanent magnet (20) arranged with the freedom to slide in a main direction (X) in said first internal space, between a first stable position for closing the first fluid connection and a second stable position for opening the first fluid connection,
∘ a second switching assembly comprising a second compartment defining a second internal space and a second permanent magnet (21) arranged with the freedom to slide in said main direction (X) in said second internal space, between a first stable position for closing the second fluid connection and a second stable position for opening the second fluid connection,
∘ the first permanent magnet (20) and the second permanent magnet (21) being oriented magnetically in the same direction, along said main direction (X) and offset in this main direction by a non-zero distance (Z) that is sufficient to generate a magnetic gap in a direction transverse to said main direction (X), said device being **characterized in that**
∘ the first permanent magnet (20) and the second permanent magnet (21) are arranged relative to one another in such a way as to be in a first state of magnetic interaction that makes it possible to obtain a first stable mechanical configuration in which the first permanent magnet (20) and the second permanent magnet (21) are held, by the magnetic effect alone, in their first position and in their second position respectively or in a second state of magnetic interaction allowing the obtaining of a second stable mechanical configuration in which the first permanent magnet (20) and the second permanent magnet (21) are held, by the magnetic effect alone, in their second position and in their first position, respectively.

2. Device according to Claim 1, **characterized in that** the first permanent magnet (20) and the second permanent magnet (21) are identical.

3. Device according to Claim 1 or 2, **characterized in that** it comprises at least one magnetic control member designed to move between a first position and a second position so as to modify the magnetic interaction between the first permanent magnet (20) and the second permanent magnet (21).

4. Device according to Claim 3, **characterized in that** the magnetic control member is a permanent magnet (50).

5. Device according to one of Claims 1 to 4, **characterized in that** said distance (Z) is defined according to the magnetic power of each permanent magnet, to the pressure of the fluid injected into the fluid circuit and/or to the size of each permanent magnet.

6. Device according to one of Claims 1 to 5, **characterized in that** each compartment is defined by a cylinder (40, 41) in which the permanent magnet can move in sliding like a piston.

7. Device according to one of Claims 1 to 6, **characterized in that** the first opening/closing means and the second opening/closing means consist of a flexible membrane (3) that can be deformed mechanically under the action of a magnet.

8. Device according to one of Claims 1 to 7, **characterized in that** it is created by assembling several superposed layers.

9. Fluid system comprising a fluid board on which there is created a fluid circuit comprising several fluid valve devices as defined in one of Claims 1 to 8, **characterized in that** it comprises control means incorporating each control member, said control means taking the form of a board (6) on which the control members are dispersed, each control member being positioned in such a way as to coincide with its fluid valve device (2) during a sequence involving the relative movement of said board with respect to the fluid circuit.

10. Use of the fluid valve device as defined in one of Claims 1 to 8 as a valve for controlling a fluid circuit which comprises a fluid inlet (10), a first fluid outlet (11) and a second fluid outlet (12), the first fluid connection being designed to connect exclusively said fluid inlet to said first fluid outlet and the second fluid connection being designed to connect exclusively said fluid inlet and said second fluid outlet.
